Europäisches Patentamt

European Patent Office

Office européen des brevets

(11) Publication number: **0 117 709**
**B1**

(12) **EUROPEAN PATENT SPECIFICATION**

(45) Date of publication of patent specification: **15.11.89**

(21) Application number: **84301112.3**

(22) Date of filing: **21.02.84**

(51) Int. Cl.⁴: **H 02 G 5/06**

(54) A gas insulated electric bus assembly.

(30) Priority: **23.02.83 JP 24415/83 u**

(43) Date of publication of application:
**05.09.84 Bulletin 84/36**

(45) Publication of the grant of the patent:
**15.11.89 Bulletin 89/46**

(84) Designated Contracting States:
**CH DE FR LI**

(56) References cited:
**US-A-3 944 716**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Iida, Tatuso c/o Patent Division**
**Tokyo Shibaura Denki K.K. 72, Horikawa-cho**
**Saiwai-ku Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

This invention relates to a gas insulated electric bus assembly which has a plurality of electric buses connected together in end-to-end relation.

Many gas insulated compact electric substations have been established in recent years because of the increase in the demand for electrical power and the necessity of delivering electrical power into large cities. Gas insulated transmission lines which are called gas insulated buses, are utilised in the manner of transmission lines connected to a substation. Such a gas insulated bus is constructed by sealing insulating gas, such as $SF_6$, into a metal pipe holding a conductor therein which is supported in an insulating manner. The main considerations in the design of gas insulated buses are, therefore, concerned with achieving good insulating properties, providing easy on-site installation of these buses and reduction of insulating gas leakage. Gas insulating buses can be laid irrespective of the ground configuration and in inclined regions. This is very useful in applying gas insulating buses to UHV substations constructed in mountainous areas.

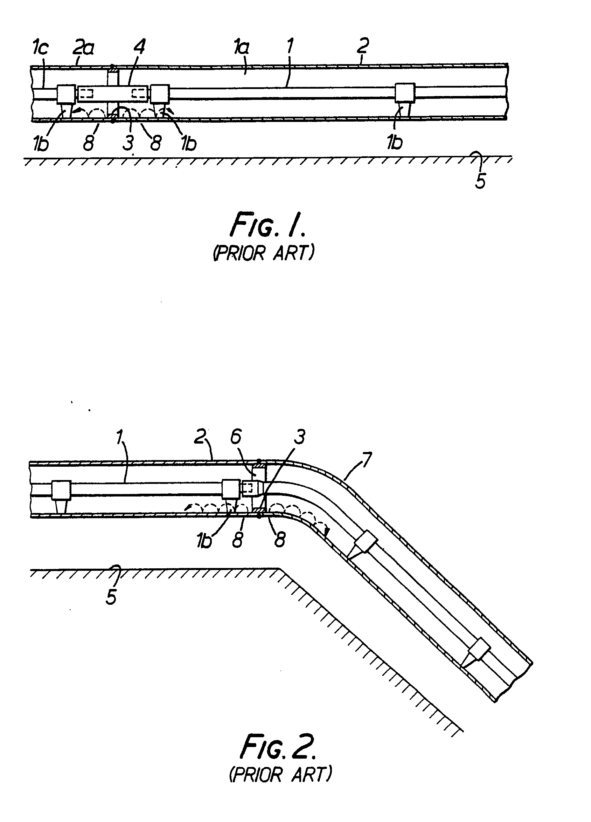

Figure 1 of the accompanying drawings shows a conventional gas insulating bus. Conductors (1), (1c) are supported by means of solid insulating support members (1b) in metal pipes (2), (2a), in which insulating gas (1a) is sealed. The metal pipes (2), (2a) are butt-welded together using an internal strap (3) and the conductors (1), (1c) are connected by means of a connecting conductor (4). The gas insulating bus is laid on the installation surface (5).

Figure 2 shows a cross-sectional view of a gas insulating bus assembly which has one of the sections provided vertically or at an angle of inclination with respect to the other sections. The metal pipe (2) of one section is welded in end-to-end relation with a bent metal pipe (7) of the inclined section and the conductor (1) of the two sections are connected together by a plug-in socket (6). The welding of the metal pipes (2), (7) is achieved on a horizontally arranged surface so as to provide easy welding. One of the problems with the arrangement of Figures 1 and 2 is that considerable debris (8), such as metal particles, enters into the pipes (2), (7) during the welding operation of the metal pipes (2a), (2) and (2), (7), as shown in Figures 1 and 2.

When an AC voltage is applied to the conductor (1), the metal particles (8) repeatedly move inside the pipes (2), as illustrated in the figures. The behaviour of the particles (8) in a horizontally disposed construction is shown in Figure 1. In the case of a bus assembly having a section inclined as shown in Figure 2, with the exception of some of the metal particles (8) that fall down the inclined section, most of the particles (8) remain in the horizontal section. In both arrangements, the repeated movement of metal particles and any other debris poses a threat to the insulating properties provided by the support members (1b).

An object of the present invention is to provide a gas insulated electric bus assembly which has improved insulating properties as compared with the prior art arrangements described above.

According to the present invention, a gas insulated electric bus assembly comprises a first electric bus located at a higher level than a second electric bus and a third electric bus interconnecting the first and second bus, each bus including a metal outer pipe and the pipes being welded together in end-to-end relation, characterised in that the welded joint between the first and third pipes and the welded joint between the second and third pipes are so positioned that debris entering the pipes as the joints are formed passes to a region below the joint between the second and third pipes and a debris trap is located at this region.

The third electric bus may be vertical or otherwise inclined at an angle to the first and second buses. The joint between adjacent metal pipes may be made by inserting the lower metal pipe into the upper metal pipe or by butt-welding.

In order that the invention may be more readily understood, it will now be described, by way of example only, with reference to the accompanying drawings, in which:-

Figure 1 is a cross-sectional view of a prior art gas insulated bus arranged horizontally;

Figure 2 is a cross-sectional view of a prior art gas insulated bus assembly having an inclined section;

Figure 3 is a cross-sectional view of a gas insulated electric bus assembly according to the present invention; and

Figures 4 and 5 are enlarged cross-sectional views of alternative forms of the joints between the pipes.

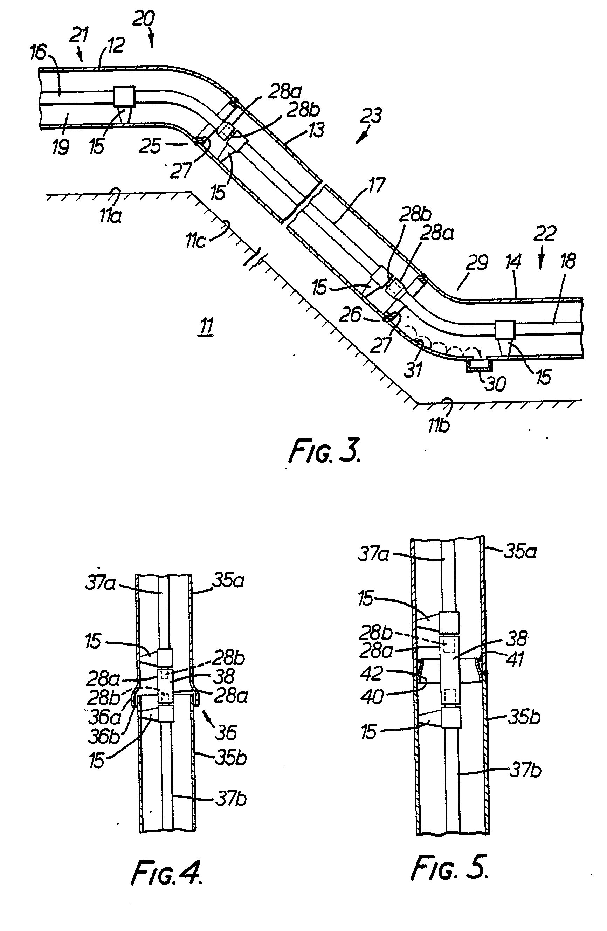

An installation surface (11) has a first high-level substantially horizontal surface (11a), a second low-level substantially horizontal surface (11b) and an inclined surface (11c) which is formed between the first and second surfaces. The surface (11c) can be a substantially vertical surface. Metal pipes (12), (13) and (14) are arranged along the surface (11) including the inclined surface (11c). These metal pipes (12), (13) and (14) are jointed together in end-to-end relation and conductors (16), (17) and (18) are supported in the pipes by means of insulating support members (15). The pipes (12), (13) and (14) are filled with insulating gas (19), such as $SF_6$, which is sealed inside them. A gas insulated electric bus assembly (20) is thus composed of a first high-level bus section (21) and a second low-level bus section (22) which are joined by an inclined third bus section (23). As previously indicated, although bus section (23) is shown as inclined in Figure 3, it could be arranged vertically.

One end of the first bus section (21) is bent downwardly with respect to the remainder of the pipe so as to coincide with the upper end of the section (23), and one end of the second bus section (22) is bent upwardly for a certain length so as to coincide with the other end of the section (23). The first and second bus sections (21) and (22) are connected to the third bus section (23) at joints (25) and (26).

Only the upper joint (25) will now be described in more detail because the joints (25) and (26) are practically of the same construction. The metal pipe (12) of the first bus (21) and the metal pipe (13) of the third bus (23) are butt-welded together from the outside of the pipes but with a strap (27) placed against the inside of the joint (25). The conductors (16) and (17) that are placed in the pipes (12) and (13) are joined together by inserting a plug (28b) on conductor 16 into a plug-in socket (28a) on conductor (17). The lower joint (26) is made in the same way. In the vicinity of the lower bus (22) below the joint (26), and in the region where the bending takes place, there is provided a debris trap (30) in the form of a pocket opening into the interior of the metal pipe (14). The debris trap (30) is placed on the underside of the bent region (29), i.e. close to the second surface (11b).

The operation of the assembly of Figure 3 will now be described. Since the joints (25) and (26) are both located in the inclined section, any debris (31), which would have an undesirable influence on the insulation and which could enter the pipes (12), (13) and (14) during the above assembly and butt-welding, is compelled to fall down to the bottom of the inclined pipe 13. This dust is then captured by the debris trap (30). The effect of capturing debris is enhanced by applying vibration to the outside of the metal pipes (12), (13) and (14),· or by temporarily applying a low voltage to the conductors (16), (17) and (18) to make the metal particles move progressively downwards, as shown in Figure 3 by the dotted line, until they are captured in the debris trap (30). As mentioned above, because the debris (31) is captured by the debris trap (30), the harmful influence on the insulating characteristics due to accidental entry of the debris during the making of the joints is removed.

The gas insulated bus assembly which is shown in Figure 3, for example, can be applied to a system having a transformer connected to the free end of bus (21) and a gas insulated switch connected to the free end of bus (22).

Figure 4 is a cross-sectional view of a joint between adjacent pipes. An upper metal pipe (35a) and a lower metal pipe (35b) are connected at a joint (36). The diameter of the end (36a) of the upper metal pipe (35a) is formed larger than that of the remaining part of the pipe. That is, the end 36a is expanded so that the adjacent end of the lower pipe (35b) can be inserted in the end (36a) of the upper pipe (35a) with a certain margin of overlap. Thus, the end (36a) of the metal pipe (35a) fits over the end of the metal pipe (35a) to cover it from above. The upper and lower pipes (35a) and (35b) are then joined together by welding the part (36b). The conductors (37a) and (37b) inside the pipes (35a) and (35b) are provided at their ends with plugs (28b) so that they can be joined together by means of a connecting conductor (38) which has plug-in sockets (28a) at both ends. The conductors (37a) and (37b) are supported by insulating support members (15). The entrance of metal debris, produced, for example, by sputtering at the weld part (36b), into the pipes (35a), (36b) is reduced by the structure of Figure 4 so that the resultant negative influence on the insulating properties is reduced.

Figure 5 is a cross-sectional view of another joint between two pipes. An end face of the upper pipe (35a) faces an end face of the lower pipe (35b). A ring (40) projects slightly into the metal pipe (35a) from the end face of the metal pipe (35b). The ring (40) is fixed on the inside surface of the lower metal pipe (35b) so that the upper end of this ring forms a gap between itself and the inside surface of the metal pipe (35a). A packing (41) is provided on the side of the ring facing the inside surface of the metal pipe (35a). The inside of the metal pipe (35a) can, therefore, be sealed by the packing (41) of the ring (40) when the lower end of the upper metal pipe (35a) and the upper end of the lower metal pipe (35b) are brought together. The joint is then welded at the weld (42). The internal conductors (37a) and (37b) are connected to each other in the same way, as shown in Figure 4. This method of jointing reduces the chance of metal debris entering into the pipes (35a) and (35b).

In the above description, the first and second buses (21) and (22) are arranged parallel to each other on parallel installation surfaces. However, there is no need for these first and second surfaces to be parallel; they could be inclined to each other. Furthermore, although the case has been described where there is an inclined surface (11c) which links the first and second surfaces (11a) and (11b), this inclined surface is not necessary. So long as the upper and lower buses are supported on the first and second surfaces, the inclined transition installation surface need not be physically present as a foundation.

**Claims**

1. A gas insulated electric bus assembly comprising a first electric bus (21) located at a higher level than a second electric bus (22), and a third electric bus (23) interconnecting the first and second bus, each bus including a metal outer pipe (12, 13, 14) and the pipes being welded together in end-to-end relation, characterised in that the welded joint (25) between the first and third pipes and the welded joint (26) between the second and third pipes are so positioned that debris entering the pipes as the joints are formed passes to a region below the joint between the second and third pipes and a debris trap (30) is located at this region.

2. A gas insulated electric bus assembly as claimed in claim 1, characterised in that the end portion of the first pipe is bent downwardly with respect to the remaining portion of the first pipe and the end portion of the second pipe is bent upwardly with respect to the remaining portion of the second pipe.

3. A gas insulated electric bus assembly as claimed in claim 1 or 2, characterised in that the end (36a) of the first pipe (35a) fits over the end (36b) of the third pipe (35b) and the end of the third pipe fits over the end of the second pipe.

4. A gas insulated electric bus assembly as claimed in claim 1 or 2, characterised in that at each welded joint the pipes are in end-to-end abutting relationship with a metal ring (40) welded to the inside of one of the pipes and overlapping the ends of the pipes and packing (41) between the metal ring and the other of the pipes.

**Patentansprüche**

1. Gasisolierte Sammelschienenanordnung mit einer ersten elektrischen Schiene (21), die auf einem höheren Niveau angeordnet ist als eine zweite elektrische Schiene (22), und mit einer dritten elektrischen Schiene (23), die die erste und die zweite Schiene miteinander verbindet, wobei jede Schiene ein Metallaußenrohr (12, 13, 14) aufweist und die Rohre stirnseitig miteinander verschweißt sind, dadurch gekennzeichnet, daß die Schweißverbindung (25) zwischen dem ersten und dem dritten Rohr und die Schweißverbindung (26) zwischen dem zweiten und dem dritten Rohr so angeordnet sind, daß Bruchstücke, die beim Ausbilden der Verbindungen in die Rohre eintreten, in einen Bereich unterhalb der Verbindung zwischen dem zweiten und dem dritten Rohr gelangen, in dem eine Bruchstückfalle (30) angeordnet ist.

2. Gasisolierte Sammelschienenanordnung nach Anspruch 1, dadurch gekennzeichnet, daß der Endteil des ersten Rohres bezüglich des verbleibenden Teiles des ersten Rohres nach unten gebogen ist und der Endteil des zweiten Rohres bezüglich des verbleibenden Teiles des zweiten Rohres nach oben gebogen ist.

3. Gasisolierte Sammelschienenanordnung nach Anspruch 1 oder 2, dadurch gekennzeichnet, daß das Ende (36a) des ersten Rohres (35a), das Ende (36b) des dritten Rohres (35b) und das Ende des dritten Rohres das Ende des zweiten Rohres übergreifen.

4. Gasisolierte elektrische Sammelschienenanordnung nach Anspruch 1 oder 2, dadurch gekennzeichnet, daß die Rohre an jeder Schweißverbindung stirnseitig stumpf aneinanderliegen, wobei ein Metallring (40) auf die Innenseite eines der Rohre geschweißt ist und die Enden der Rohre überlappt und eine Packung zwischen dem Metallring und dem jeweils anderen Rohr angeordnet ist.

**Revendications**

1. Montage de barres ombinus gazeux qui comprend une première barre (21) située à un niveau plus élevé qu'une barre (22) et une troisième barre (23) interconnectant les deux premières, chaque barre comportant un tuyau métallique extérieur (12, 13, 14), lesdits tuyaux étant soudés ensemble bout à bout, caractérisé en ce que le joint soudé (25) entre le premier et le troisième tuyaux et le joint soudé (26) entre le second et le troisième tuyaux sont placés de telle manière que les débris entrant dans les tuyaux au cours de la formation des joints gagnent une région située au-dessous du joint entre le second et le troisième tuyaux, région qui comporte un piège à débris (30).

2. Montage selon la revendication 1, caractérisé en ce que l'extrémité du premier tuyau est coudée vers le bas par rapport à la partie restante de celui-ci, tandis que l'extrémité du second tuyau est pliée vers le haut par rapport à la partie restante de celui-ci.

3. Montage selon l'une quelconque des revendications 1 ou 2 caractérisé en ce que l'extrémité (36a) du premier tuyau (35a) vient s'enfiler au-dessus de l'extrémité (36b) du troisième tuyau (35b), tandis que l'extrémité du troisième tuyau s'ajuste au-dessus de l'extrémité du second tuyau.

4. Montage selon l'une quelconque des revendications 1 ou 2, caractérisé en ce que, à chaque joint soudé, les tuyaux sont disposés bout à bout et en ce qu'une bague métallique (10) est soudée à l'intérieur de l'un des tuyaux de façon à couvrir les extrémités de ceux-ci, une garniture d'étanchéité (41) étant interposée entre la bague métallique et l'autre des tuyaux.

FIG. I.
(PRIOR ART)

FIG. 2.
(PRIOR ART)

FIG. 3.

FIG. 4.

FIG. 5.

2